# EUROPEAN PATENT APPLICATION

(11) **EP 2 897 391 A2**
(43) Date of publication of application: **22.07.2015**
(21) Application number: 13794590.3
(22) Date of filing: 24.07.2013
(51) Int. Cl.: H04W 4/12

(54) **LEFT-MESSAGE TRANSFER DEVICE AND METHOD, AND MESSAGE-LEAVING SYSTEM**

(30) Priority: 13.09.2012 CN 201210338432
(71) Applicant: ZTE Corporation, Guangdong Province 518057 (CN)
(72) Inventor: LI, Chao, Shenzhen Guangdong Province 518057 (CN); QIAN, Chunxiao, Shenzhen Guangdong Province 518057 (CN); HE, Xuyi, Shenzhen Guangdong Province 518057 (CN)
(74) Representative: Novagraaf Technologies
(86) International application number: PCT/CN2013/079987
(87) International publication number: WO 2013/174333

(57) **Abstract**

Disclosed are a device and method for transferring a left-message and a system for leaving a message, which are used for leaving a message for a receiving party when a called party cannot be connected in real time. The device for transferring the left-message comprises: a receiving component configured to receive a left message sent by a first terminal; a storage component connected to the receiving component and configured to store the left message; and a sending component connected to the storage component and configured to send the left message to a second terminal under a condition that a preset sending condition set by the first terminal is satisfied. The technical solution in the embodiments of the present invention may be applied to enable a called party to receive a left message according to a condition set by a calling party.

## Description

### Technical Field

The present invention relates to the field of communications, and in particular to a device and method for transferring a left message and a system for leaving a message.

### Background

As the information communication develops rapidly nowadays, when using telephones for communication, people may be bothered by the following situations: no one answers the phone calls after a long time calling because the receiving party is not there; important callings are missed due to going out on business; and it's not convenient to answer the calls during important work and meetings Hence, the voice message service is proposed. The voice message service may transfer incoming calls that the user cannot answer in time to voice messages to enable the callers to leave messages; and prompt the called party sometime in the future to enable the called party to listen to the left-messages conveniently.

This is the initial stage of the development of the voice message service. However, as the 3G technology and the next generation network technology mature and go into business applications, service applications based on 3G networks become richer. The advent of smart phones provides more interaction means between the users and the voice message service, and the biggest feature is that the users can upload location information thereof via smart phones.

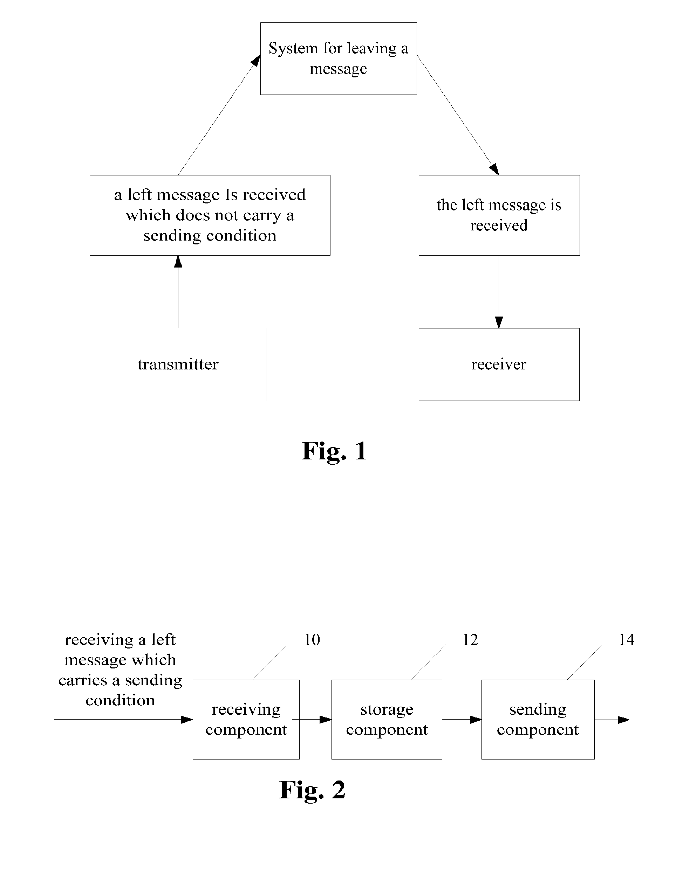

As shown in figure 1, when using the existing voice message systems, the users cannot specify the receiving geographical location and time. As shown in figure 2, the core composition modules of a currently popular voice message system comprise an information receiving module, an information storage module and an information sending module. The basic work principle is as follows: the user (the voice message transmitter) sending a message to the voice message system, the information receiving module receiving the message and invoking the information storage module to storage same, then the information sending module sending the voice message to the voice message receiver.

Therefore, the existing system for leaving a message has the problem that the called user (the voice message transmitter) cannot receive the left messages according to the conditions set by the calling user.

### Summary

The embodiments of the present invention disclose a device and method for transferring the left-message, and a system for leaving a message, which are used for solving the problem of the existing system for leaving a message that a called user (the voice message transmitter) cannot receive the left message according to a condition set by a calling user.

According to one aspect of the embodiments of the present invention, a device for transferring a left-message is provided. The device for transferring the left-message comprises: a receiving component configured to receive a left message transmitted by a first terminal; a storage component connected to the receiving component and configured to store the left message; and a sending component connected to the storage component and configured to send the left message to a second terminal under the condition that a preset sending condition set by the first terminal is satisfied.

Preferably, the sending component comprises: a detection component configured to detect a power-on state of the second terminal; an acquiring component configured to acquire the left message and the preset sending condition corresponding to the second terminal when the second terminal is powered on; and a transmitting component configured to transmit the left messages to the second terminal under a condition that the preset sending condition is satisfied.

Preferably, the preset sending condition comprises a time condition specified by the first terminal for the second terminal to receive the left messages.

Preferably, the preset sending condition comprises a location condition specified by the first terminal for the second terminal to receive the left message.

Preferably, the device for transferring the left-message further comprises an uploading component connected to the storage component and configured to acquire the location information about the second terminal.

Preferably, the left message at least comprises one of the following: voice information, text information and video information.

According to another aspect of the embodiments of the present invention, a system for leaving a message is further provided, and the following technical solution is adopted:
the system for leaving a message comprises the above-mentioned device for transferring the left-message.

According to still another aspect of the embodiments of the present invention, a method for transferring a left message is further provided, and the following technical solution is adopted:
the method for transferring the left message comprises: acquiring a left message transmitted by a first terminal; storing the left message; and sending the left message to a second terminal under a condition that the preset sending condition set by the first terminal is satisfied.

Preferably, after acquiring the left message corresponding to the preset sending condition, the method for transferring the left message further comprises: detecting a power-on state of the second terminal; and querying the left message and the preset sending condition corresponding to the second terminal when the second terminal is powered on.

Preferably, the preset sending condition comprises a time condition specified by the first terminal for the second terminal to receive the left message.

Preferably, the preset sending condition comprises a location condition specified by the first terminal for the second terminal to receive the left message.

Preferably, the left message at least comprises one of the following: voice information, text information and video information.

Through the above-mentioned technical solutions in the embodiments of the present invention, a receiver, a receiving time and a receiver location may be specified when a calling party transmits a left message, thereby utilizing the resources to a greater extent, enabling the user to transmit information more conveniently, and improving the user experience of the user.

### Brief Description of the Drawings

Drawings, provided for further understanding of the present invention and forming a part of the specification, are used to explain the present invention together with embodiments of the present invention rather than to limit the present invention. In the drawings:
Fig. 1 shows a working schematic diagram of a voice system in the related art;
Fig. 2 shows a working schematic diagram of another voice system in the related art;
Fig. 3 shows a schematic structure diagram of a system for leaving a message in a first embodiment of the present invention;
Fig. 4 shows a schematic structure diagram of a system for leaving a message in a second embodiment of the present invention;
Fig. 5 shows a schematic structure diagram of a system for leaving a message in a third embodiment of the present invention; and
Fig. 6 shows a flow chart of a method for transferring a left message in a fourth embodiment of the present invention.

### Detailed Description of the Embodiments

The embodiments of the present invention are further illustrated hereinafter in conjunction with the drawings. However, the present invention can be implemented by various implementations defined and covered by the claims.

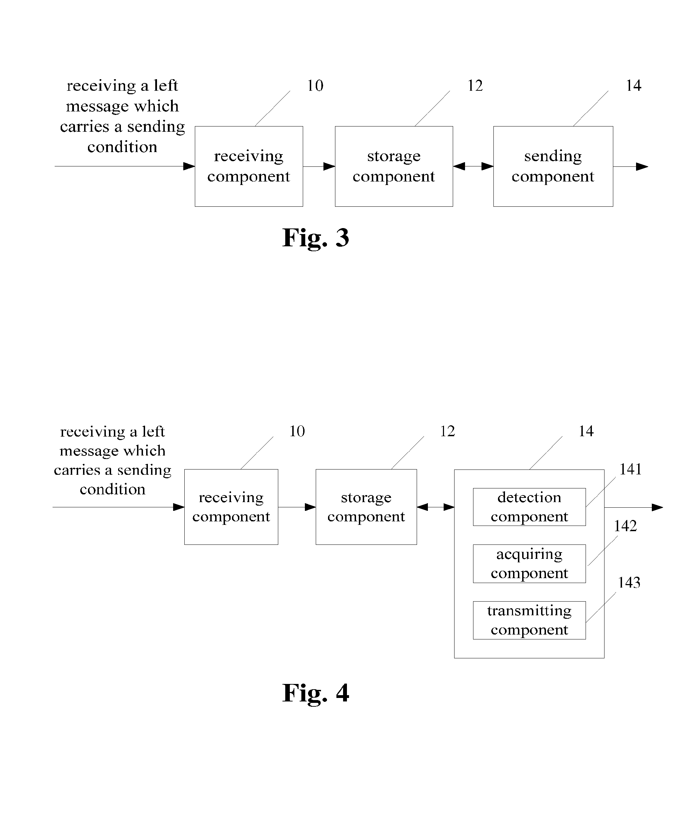

Fig. 3 shows a schematic structure diagram of a system for leaving a message according to an embodiment of the present invention.

As shown in Fig. 3, the system for leaving the message comprises: a receiving component 10 configured to receive a left message transmitted by a first terminal; a storage component 12 connected to the receiving component 10 and configured to store the left message; and a sending component 14 connected to the storage component 12 and configured to send the left message to a second terminal under the condition that a preset sending condition set by the first terminal is satisfied.

When transmitting the left message, the first terminal in the above-mentioned technical solution of the present embodiment, i.e., the calling party, carries the receiving condition which is generally the time condition and location condition for the second terminal, i.e., the called party. For example, the first terminal expect to enable the second terminal to receive the left message at 8:00 the next morning; after receiving the left message, the receiving component 10 uploads the left message and invokes the storage component 12 to store the left message to a storage medium, and then returns a storage result to the first terminal; since the left message carries the preset sending condition, such as the location condition, the first terminal wants to enable the second terminal to receive the left message when in the office, when the location condition is satisfied, the sending component 14 is invoked to transmit the left message to the second terminal; in this way, by setting the preset sending condition to arrive at the receiving time and/or receiving location desired by the first terminal, the user experience of the user is improved.

In addition, the above-mentioned preset sending condition may be set in various ways, for example, as provided in the embodiments of the present invention, the sending condition is carried via the left message; and the sending condition may also be set by a user logging into a server, and the sending component checks the sending condition via the server, then transmits the corresponding left message to the corresponding second terminal according to the sending condition.

Fig. 4 shows a schematic structure diagram of a system for leaving a message according to a second embodiment of the present invention.

As shown in Fig. 4, the sending component 14 comprises: a detection component 141 configured to detect a power-on state of the second terminal; an acquiring component 142 configured to acquire the left message corresponding to the first terminal and the preset sending condition when the second terminal is powered on; and a transmitting component 143 configured to transmit the left messages to the second terminal under the condition that the preset sending condition is satisfied.

In the above-mentioned technical solution of the present embodiment, after the storage component 12 receives the left message of the second terminal, the detection component 141 in the sending component 14 starts to detect the power-on state of the second terminal; after determining that the second terminal is powered on, the acquiring component 142 in the sending component 14 is first invoked to acquire the left message of the second terminal, and the transmitting component 143 is then invoked to send the left message to the second terminal under the condition that the left message satisfies the sending condition. The embodiment also improves the user experience of the user by setting the preset sending condition to arrive at the receiving time and/or receiving location desired by the first terminal.

When the preset sending condition is a time condition, the sending component 14 is further configured to monitor whether the time set by the time condition is satisfied, and to transmit the left message to a corresponding second terminal when the time condition is satisfied. For example, the first terminal wants to enable the second terminal to receive the left message at 8:00 the next morning, thus when 8:00 the next morning arrives, the sending component 14 is triggered to transmit the left message to a corresponding second terminal.

In the embodiment, the preset sending condition corresponding to the left message is about time, so that the technical solution of the present embodiment may be applied to enable the user to determine when (a time dimension) the receiver (a participant dimension) receives the left message when transmitting the left message, thereby utilizing various types of data to a greater extent, and improving the user satisfaction and market competitiveness.

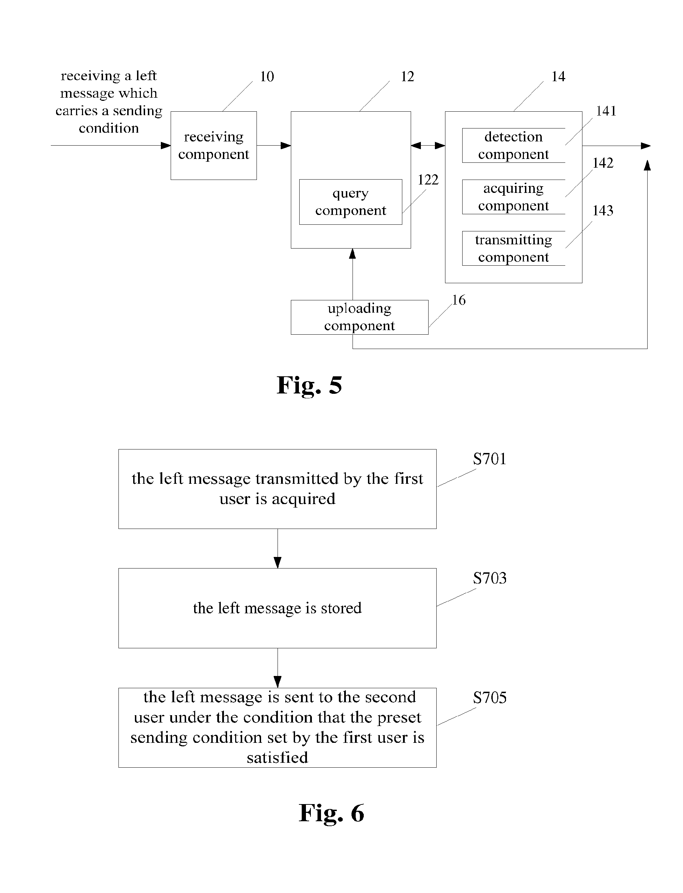

Fig. 5 shows a schematic structure diagram of a system for leaving a message according to a third embodiment of the present invention.

As shown in Fig. 5 is, the preset sending condition comprises both a time condition and a location condition in the embodiment, and the system for leaving the message further comprises an uploading component 16, and a storage component 12 which further comprises a query component 122; therefore, the location information reported in real time by the second terminal is stored in the storage component 12 via the uploading component 16, and the query component 122 in the storage component 12 queries the location information and triggers the sending component 14 to send the left message when the location information satisfies the location condition in the preset sending condition.

More specifically, after receiving the left message, the receiving component 10 first stores the left message to the storage medium in the storage component 12 so as to save the left message, and then returns a storage result to the user. When the user geographical location information transmitted by the uploading component 16 is received, the user geographical location information is first saved in the storage medium. When a user left message acquiring request transmitted by the sending component 14 is received, the left message is first queried from the storage medium, and then the sending component 14 returns a query result. When a user geographical location query request transmitted by the sending component 14 is received, the user geographical location information is first queried from the non-transitory storage medium, and then the query result is returned to the sending component 14. When the user geographical location information satisfies the location information in the preset sending condition, the transmitting component 143 in the sending component 14 is invoked to transmit the queried left message to the second terminal.

In order to make the technical solutions in the embodiments of the present invention clearer and more specific, the technical solutions of the embodiments of the present invention are described in combination with examples particularly used:

### Example I

A manager in a company deploys work for a subordinate, and the manager wants the subordinate to receive his left message to learn the deployed work task when the subordinate begin to work. The system for leaving a message in an embodiment of the present invention will perform the above-mentioned work in the follows steps.
I. The manager in the company records the left message, sets a receiving time to be 8:30 am and a location to be a company office building, and transmits the left message to the system for leaving the message;
II. the system for leaving the message receives and stores the left message;
III. the system for leaving the message receives a geographical location of the subordinate, judges whether the receiving condition is satisfied, if yes, then send the left message at 8:30 am; and
IV. the mobile phone of the subordinate ringing at the same time, and the subordinate listening to the voice instruction transmitted by the manager.

### Example II

A salesman hopes that a client outside a region may receive his welcome voice upon arriving at the local city. In this way, the client favourable impression may be obtained and more sales opportunities may be obtained. The system for leaving the message in the embodiments of the present invention will work in the follows steps.
I. The salesman records a left message for welcoming the client outside the region, sets the receiving location to be a local city, and transmit the left message to the system for leaving the message.
II. The system for leaving the message receives and stores the left message.
III. The system for leaving the message receives a geographical location of the client, and if the client arrives at the local city, sends the left message to the client.
IV. upon the client arriving at the local city, a mobile phone of the client rings, and the client listens to the welcome voice of the salesman and may call the salesman by replying "0" according to the prompt.
V. The salesman answers the calling from the client.

### Example III

A variety show launches an activity, and the players taking part may receive a next task only when arriving at a certain location. The system for leaving a message in the embodiments of the present invention will work in the follows steps.
I. The staffs of the variety show records the left message, sets the receiving location, and transmits the left message to the system for leaving a message.
II. The system for leaving the message receives and stores the left message.
III. The system for leaving the message receives a geographical location from a player, and if the player arrives at the specified location, then sends the left message to the player.
IV. The player receives the left message carrying a next instruction.

In addition, the above-mentioned left message may be voice information, text information or video information.

The above-mentioned technical solutions in the embodiments of the present invention may be applied so that a receiver, a receiving time and a receiver location may be specified when a calling party transmits the left message, thereby utilizing the resources to a greater extent, enabling the user to transmit information more conveniently, and improving the user experience of the user.

Fig. 6 shows a flow chart of a method for transferring a left message in a fourth embodiment of the present invention.

As shown in Fig. 6, the method for transferring the left message may comprise the following steps.

S701: the left message carrying a preset sending condition transmitted by the first terminal is acquired.

S703: the left message corresponding to the preset sending condition is stored.

S705: the left message is sent to the second terminal under the condition that the preset sending condition set by the first terminal is satisfied.

Preferably, after acquiring the left message corresponding to the preset sending condition, the method for transferring the left message further comprises: detecting a power-on state of the second terminal; and querying the left message and the preset sending condition corresponding to the first terminal when the second terminal powers on.

Preferably, the preset sending condition comprises a time condition specified by the first terminal for the second terminal to receive the left message.

Preferably, the preset sending condition comprises a location condition specified by the first terminal for the second terminal to receive the left message.

Preferably, the left message at least comprises one of the following: voice information, text information and video information.

The technical solutions in the embodiments of the present invention may enable the user to determine when (a time dimension) and where (a spatial dimension) the receiver (a participant dimension) receives the left message when transmitting the left message. The system in the embodiments of the present invention utilizes various types of data to a greater extent, and improves the user satisfaction and market competitiveness.

What mentioned above are the preferred embodiments of the present invention, and it should be explained that various improvements or modifications can also be made by those skilled in the art within the principle of the embodiments of the present invention and shall fall within the protection scope of the present invention.

## Claims

1. A device for transferring a left message, **characterized by** comprising:
a receiving component configured to receive a left message transmitted by a first terminal;
a storage component connected to the receiving component and configured to store the left message; and
a sending component connected to the storage component and configured to send the left message to a second terminal under a condition that a preset sending condition set by the first terminal is satisfied

2. The device for transferring the left message as claimed in claim 1, **characterized in that** the sending component comprises:
a detection component configured to detect a power-on state of the second terminal;
an acquiring component configured to acquire the left message and the preset sending condition corresponding to the second terminal when the second terminal is powered on; and
a transmitting component configured to transmit the left message corresponding to the second terminal to the second terminal under a condition that the preset sending condition is satisfied.

3. The device for transferring the left-message as claimed in claim 2, **characterized in that**
the preset sending condition comprises a time condition specified by the first terminal for the second terminal to receive the left message.

4. The device for transferring the left-message as claimed in claim 2 or 3, **characterized in that**
the preset sending condition comprises a location condition specified by the first terminal for the second terminal to receive the left messages; and
the device for transferring the left-message further comprises an uploading component connected to the storage component and configured to acquire location information about the second terminal.

5. The device for transferring the left-message as claimed in any one of claims 1-3, **characterized in that** the left message comprise at least one of the following:
voice information, text information and video information.

6. A system for leaving a message, **characterized by** comprising the device for transferring the left-message as claimed in any one of claims 1-5.

7. A method for transferring a left message, **characterized by** comprising:
acquiring the left message transmitted by a first terminal;
storing the left message; and
sending the left message to the second terminal under a condition that a preset sending condition set by the first terminal is satisfied.

8. The method for transferring the left message as claimed in claim 7, **characterized in that** after acquiring the left message corresponding to the preset sending condition, the method for transferring the left message further comprises:
detecting a power-on state of the second terminal; and
querying the left message corresponding to the second terminal and the preset sending condition when the second terminal is powered on.

9. The method for transferring the left message as claimed in claim 8, **characterized in that**
the preset sending condition comprises a time condition specified by the first terminal for the second terminal to receive the left message.

10. The method for transferring the left message as claimed in claim 8 or 9, **characterized in that** the preset sending condition comprises a location condition specified by the first terminal for the second terminal to receive the left message.

11. The method for transferring the left message as claimed in any one of claims 7-9, **characterized in that** the left message comprise at least one of the following:
voice information, text information and video information.
